Europäisches Patentamt

(19) European Patent Office

Office européen des brevets

(11) Publication number: **0 013 805**
**B1**

## (12) EUROPEAN PATENT SPECIFICATION

(45) Date of publication of patent specification: **23.02.83**

(21) Application number: **79302744.2**

(22) Date of filing: **30.11.79**

(51) Int. Cl.³: **A 47 J 42/56,**
**A 47 J 43/046**

(54) A food processor having a safety device.

(30) Priority: **30.01.79 GB 7903195**

(43) Date of publication of application:
**06.08.80 Bulletin 80/16**

(45) Publication of the grant of the patent:
**23.02.83 Bulletin 83/8**

(84) Designated Contracting States:
**DE FR IT**

(56) References cited:
**DE - A - 2 250 177**
**FR - A - 2 043 770**
**FR - A - 2 140 891**
**US - A - 2 194 211**
**US - A - 3 128 996**

(73) Proprietor: **RAYMOND INDUSTRIAL LIMITED**
**410 Kwun Tong Road**
**Kwun Tong Kowloon (HK)**

(72) Inventor: **Leung, Kwok Tze**
**410 Kwun Tong Road**
**Kowloon (HK)**

(74) Representative: **Rooney, Paul Blaise et al,**
**D.Young & Co. 10 Staple Inn**
**London WC1V 7RD (GB)**

Courier Press, Leamington Spa, England.

A food processor having a safety device

This invention relates to a food processor having an electric motor drive unit with a directly or indirectly driven drive shaft to which mixing and/or cutting blades are attachable and a spring biased safety device for breaking rotation of the drive shaft.

Such a food processor usually has a bowl removably attachable to the drive unit with the dangerous disadvantage that it is possible for a user of the processor to remove a cover from the bowl and thus obtain access to the mixing and/or cutting blades whilst the latter are still moving, with consequent risk of damage to the user's fingers, even if the user has first switched off the motor drive.

FR—A—2 043 770 discloses a food processor having an axially slidable drum or liner in a bowl casing. A driven shaft carries the cutter at the end which projects into the drum and carries a drive coupling at the other end which projects outside the bowl casing. The driven shaft is displaceable axially to disconnect the coupling from a drive motor, by a compression spring acting between the drum and casing, when a cover is removed from the casing thus allowing the drum and attached driven shaft to be axially displaced by the spring. This automatic disconnection of the drive when the cover is removed provides a mechanical safety device which may be further enhanced by the provision of cooperating brake surfaces on the contacting faces of the coupling and casing. However this construction has the drawback that these brake surfaces only contact one another after the drum has moved axially to the limit of its travel which may be some time after the cover has been removed and in this travel period the cutter continues to rotate unimpeded and can still be contacted by the hand of a user, particularly as the cutter also moves upwardly towards the user.

A similar food processor as proposed in DE—A—2 250 177 also provides automatic mechanical disconnection of the drive, when a cover is removed from the bowl, by allowing a telescopic driven shaft to telescope axially under the action of a return spring and thus disconnect the driven shaft coupling from the drive unit. The driven shaft is extended into the coupling engaging drive position against the action of the return spring, when the cover is on the processor, by a pressure rod axially displaced by the cover. Rotation of the driven shaft after automatic drive disconnection consequent upon removal of the cover from the bowl is braked by cooperating braking surfaces provided on the bowl and the driven shaft which engage when the driven shaft axially telescopes. Once again this construction has the drawback of allowing the cutter to continue to rotate unimpeded for a period of time after the cover is removed until the braking surfaces engage.

A food processor having an electrical braking system has been disclosed in FR—A—2·140 891 in which the cover when on the bowl holds an electric switch open against a return spring such that removal of the cover allows the spring to close the switch and thus short circuit the electric drive motor armature. This type of electrical braking device has the drawback that the switch may easily be hindered in operation by ingress of material such as dust or particles of food from the processor with consequent dangerous stoppage or delay of the switch action.

A variable speed electric motor using a frictional brake device has been described in US—A—2 194 211 in which rotation of a drum rotatably connected to the armature shaft via a torsion spring is braked by a brake pad selectively brought thereagainst the drum periphery. This latter arrangement has the drawback of being unduly complex for use in a food processor and is only intended to vary the speed of rotation of the armature shaft and not stop rotation entirely.

The aim of the invention is to reduce the drawbacks presented by the prior art.

The problem of the invention is to provide a food processor with a safety device for stopping movement of the blades or cutters as soon as possible after the drive motor has been switched off, which processor is of simple construction, reliable in operation and relatively inexpensive of manufacture.

The problem is solved according to the invention in that the safety device includes a brake pad of friction material and means operative resiliently to maintain the pad in contact with the drive shaft, without rotation therewith, to brake rotation of the latter, the brake pad being in the form of a rod, one end of which is operative to contact the drive shaft periphery, and the means including a compression coil spring for urging the rod end radially with respect to the longitudinal axis of the drive shaft, into contact with the drive shaft side periphery.

For a better understanding of the present invention, and to show how the same may be carried into effect, reference will now be made, by way of example, to the accompanying drawings, in which:—

Figure 1 is a longitudinal section view through a safety device and a partially sectioned portion of a food processor motor drive unit and drive shaft of a food processor according to a first embodiment of the invention.

Figure 2 is a view from above of a housing of the device of Figure 1,

Figure 3 is a sectional view taken on the line A—A of Figure 2,

Figure 4 is a longitudinal section view of a shoe of the device of Figure 1, and

Figure 5 is a view from the open end of Figure 4.

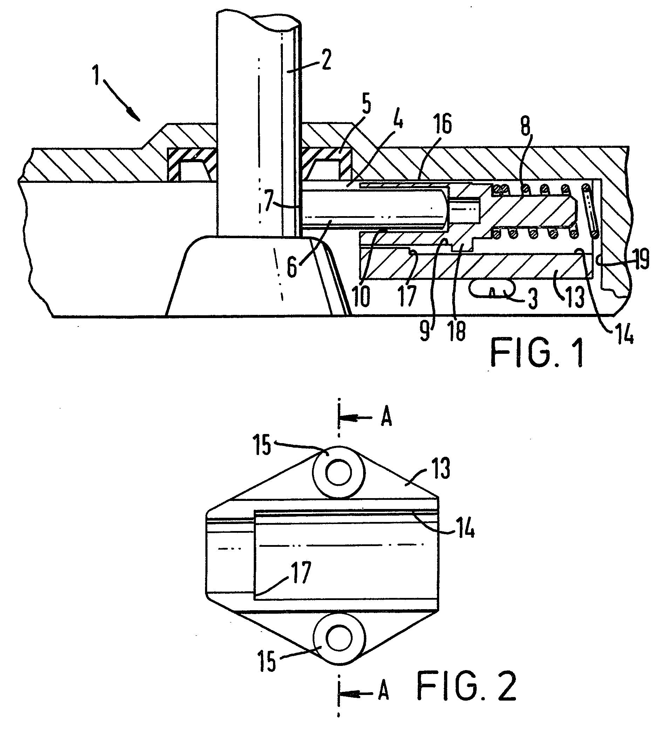

A safety device as shown in the accompanying drawings, in particular in Figure 1 thereof, forms part of a food processor of the invention having an electric motor drive unit generally indicated at 1 with a directly driven drive shaft 2 to which mixing and/or cutting blades (not shown) are attachable. The safety device alternatively is attached to a drive shaft which is indirectly driven *via* a belt (not shown) from the drive unit 1. The safety device is releasably attachable, such as by screws 3, to an inner surface 4 of the drive unit 1 in the vicinity of the drive shaft 2 which projects from the unit 1 *via* a seal 5.

The device includes a brake pad of friction material such as leather, in the form of a rod 6. Means are provided for resiliently maintaining the rod 6 in contact at one end 7 with the periphery of the drive shaft 2 to brake rotation of the latter and thereby speedily to stop rotation of the shaft 2 when the supply of current to the electric motor drive unit 1 has been stopped. The means includes a compression coil spring 8 operative to urge the rod end 7 radially with respect to the longitudinal axis of the drive shaft, against the side periphery of the shaft 2.

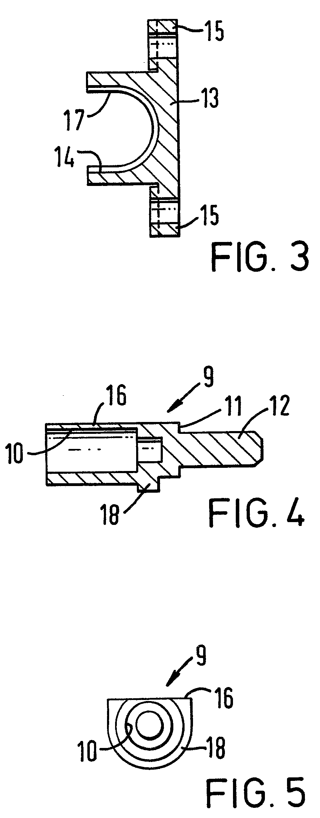

To this end a shoe 9 is interposed between the rod 6 and the spring 8. As can be seen from Figures 1, 4 and 5, this shoe 9 has a blind bore 10 at one end for releasably accommodating at least part of the brake pad rod 6. At the other end the shoe 9 has a spigotted shoulder with a shoulder 11 and a spigot 12 projecting therefrom. One end of the spring 8 fits over the spigot 12 and bears against the shoulder 11 as shown in Figure 1.

The shoe 9 is slidably mounted in a housing 13 which is axially bored or recessed as at 14. As shown in the illustrated embodiment the bore is a recess 14 open at each end and opening lengthwise through the top of the housing 13. The housing 13 is releasably attachable to the surface 4 of the unit 1 by the screws 3 passing through holed lugs 15, so that the lengthwise opening of the recess 14 is closed off by the surface 4 with which it mates. To this end the upper surface of the housing 13 is planar and the upper surface 16 of the otherwise cylindrical cross-section shoe 9 also is planar to slide on and conform to the undersurface 4 of the unit 1 when the housing 13 is attached thereto. The flat surface 16 of the shoe 9 in sliding contact with the surface 4 acts to prevent rotation of the shoe 9 in the housing recess 14.

An annular shoulder 17 is provided in the recess 14 adjacent the recess end located closer to the shaft 2. A corresponding annular external collar 18 is provided on the shoe 9 intermediate the ends thereof for engagement with the annular shoulder 17 in the recess 14 to limit the travel of the shoe 9 in the direction of the shaft 2 and hence prevent the escape of the shoe from the housing recess end through which the rod end 7 projects from the shoe bore 10. With the shoe 9 in the recess 14 and the housing 13 secured to the unit surface 4 the spring 9 acting at one end on the shoe shoulder 11 acts at the other end either on a blind end of the bore or recess 14 or against an adjacent face 19 provided on the unit 1. The spring being under compression thus resiliently urges the brake pad rod 6 *via* the shoe 9 towards the shaft 2 and maintains the rod end 7 in contact therewith to act as a brake therefore. As the rod 6 wears it is displaced towards the shaft 2 by the spring 8 and maintained in contact with the shaft 2 until the collar 18 engages the shoulder 17. At this point wear on the rod 6 can no longer be taken up by the device and the worn shortened rod 6 must be removed from the open end of the bore 10 in the shoe 9 and replaced by a fresh length of rod 6. The fresh length of rod 6 in contact at its end 7 with the shaft 2 displaces the shoe collar 18 away from the shoulder 17 once again and increases the compressive force on the spring 8 which maintains the rod end in contact with the shaft 2.

The shoe 9 and housing 13 can be made of any convenient material, preferably moulded plastics. The force exerted by the spring 8 to urge the rod 6 against the shaft 2 can be varied by appropriate choice of the strength of the spring 8.

## Claims

1. A food processor having an electric motor drive unit (1) with a directly or indirectly driven drive shaft (2) to which mixing and/or cutting blades are attachable and a spring biassed safety device for braking rotation of the drive shaft, characterised in that the safety device includes a brake pad (6) of friction material and means (8) operatively resiliently to maintain the pad (6) in contact with the drive shaft (2), without rotation therewith, to brake rotation of the latter, the brake pad (6) being in the form of a rod, one end (7) of which is operative to contact the drive shaft periphery, and the means (8) including a compression coil spring for urging the rod end (7) radially with respect to the longitudinal axis of the drive shaft (2), into contact with the drive shaft side periphery.

2. A food processor according to Claim 1, including a slidably mountable shoe (9) one end of which has a blind bore (10) for accommodating at least part of the brake pad rod (6) and the other end of which has a spigotted shoulder (11, 12) on which one end of the coil spring is mountable in contact with the shoulder (11) resiliently to urge the shoe (9) and thereby the brake pad rod end (7) into contact with the drive shaft side periphery.

3. A food processor according to Claim 2, including an axially bored or recessed housing (13) releasably attached to a surface of the motor drive unit (1) in the vicinity of the drive shaft (2) thereof, which housing (13) has an annular shoulder (17) in the bore or recess (14) thereof adjacent the end of the housing bore or recess (14) located closer to the drive shaft (2) when the housing (13) is attached to the motor drive unit surface (4).

4. A food processor according to Claim 3, wherein the shoe (9) is slidably locatable in the housing bore or recess (14) so that the brake pad rod end (7) projects from the open end of the housing bore or recess (14) closer to the drive shaft (2) when the housing (13) is attached to the motor drive unit surface (4), an annular external collar (18) being provided on the shoe (9) for engagement with the annular shoulder (17) on the housing bore or recess (14) to limit the travel of the shoe (9) and to prevent escape of the shoe from the housing bore or recess end, and the coil spring being housable in the housing bore or recess (14) on the shoe spigot (12) to act at one end against the shoe spigotted shoulder (11) and at the other end against either a blind end of the housing bore or recess (14) or against an adjacent face (19) of the motor drive unit (1) with the housing (13) attached thereto.

## Patentansprüche

1. Küchenmaschine mit einer Elektromotor-Antriebseinheit (1) mit einer direkt oder indirekt angetriebenen Antriebswelle (2), an der Mix- und/oder Schniedblätter befestigbar sind und mit einer Feder vorgespannten Sicherheitseinrichtung zum Bremsen der Drehung der Antriebswelle, dadurch gekennzeichnet, daß die Sicherheitseinrichtung einen Bremspuffer (6) aus Reibmaterial und Mittel (8) beinhaltet, mit denen der Puffer (6) federnd in Kontakt mit der Antriebswelle (2), ohne Drehung mit ihr, gehalten ist, um deren Drehung zu bremsen, wobei der Bresmpuffer (6) stabförmig ist und sein eines Ende (7) den Umfang der Antriebswelle kontaktiert, und daß die Mittel (6) eine Druckschraubenfeder beinhalten, um das Stabende (7) radial bezüglich der Lägsachse der Antriebswelle (2) in Kontakt mit dem seitlichen Umfangsmantel der Antriebswelle zu drücken.

2. Küchenmaschine nach Anspruch 1, beinhaltend einen verschieblich montierbaren Schuh (9), dessen eines Ende eine Blindbohrung (10) zur passenden Aufnahme mindestens eines Teiles des Bremspufferstabes (6) hat und dessen anderes Ende eine zentrierzapfenartige Schulter (11, 12) hat, auf die ein Ende der Schraubenfeder in Kontakt mit der Schulter (11) montierbar ist, um den Schuh (9) und dadurch das Bremspufferstabende (7) in Kontakt mit dem seitlichen Umfangsmantel der Antriebswelle federnd zu drücken.

3. Küchenmaschine nach Anspruch 2, beinhaltend ein axial gebohrtes oder ausgespartes Gehäuse (13), das lösbar an einer Fläche der Motorantriebseinheit (1) in der Nähe der Antriebswelle (2) befestigt ist, welches Gehäuse (13) eine ringförmige Schulter (17) in der Bohrung oder Aussparung (14) benachbart demjenigen Ende der Gehäusebohrung oder Gehäuseaussparung (14) hat, das näher an der Antriebswelle (2) liegt, wenn das Gehäuse (13) an der Fläche (4) der Motorantriebseinheit befestigt ist.

4. Küchenmaschine nach Anspruch 3, bei der der Schuh (9) gleitend in der Gehäusebohrung oder Gehäuseaussparung (14) so anzuordnen ist, daß das Bremspufferstabende (7) aus dem offenen Ende der Gehäusebohrung oder Gehäuseaussparung (14) vorsteht, welches näher an der Antriebswelle (2) liegt, wenn das Gehäuse (13) an der Fläche (4) der Motorantriebseinheit befestigt ist, wobei ein äußerer ringförmiger Kragen (18) auf dem Schuh (9) zum Eingriff mit der ringförmigen Schulter (17) der Gehäusebohrung oder der Gehäuseaussparung (14) vorgesehen ist, um die Wegbahn des Schuhs (9) zu begrenzen und ein Herausgelangen des Schuhs aus dem Ende der Gehäusebohrung oder der Gehäuseaussparung zu verhindern und wobei die Schraubenfeder in der Gehäusebohrung oder der Gehäuseaussparung (14) auf dem Schuhzentrierzapfen (12) unterbringbar ist, um an ihrem einen Ende gegen die zentrierzapfenartige Schulter (11) des Schuhs und an ihrem anderen Ende entweder gegen ein Blindende der Gehäusebohrung oder Gehäuseaussparung (14) oder gegen eine angrenzende Fläche (19) der Motorantriebseinheit (1) mit dem daran befestigten Gehäuse (13) zu wirken.

## Revendications

1. Machine de transformation de produits alimentaires possédant une unité d'entraînement (1) à moteur électrique avec un arbre de commande (2) à entraînement direct ou indirect, auquel peuvent être fixés des couteaux et/ou des lames de mélange, et possédant un dispositif de sécurité précontraint sous l'effet d'un ressort, destiné à freiner la rotation de l'arbre de commande, caractérisée en ce que le dispositif de sécurité comprend un tampon de freinage (6) en un matériau de frottement et un moyen (8) destiné à maintenir d'une manière résiliente le tampon (6) en contact avec l'arbre de commande (2) sans sourner avec ce dernier, pour freiner la rotation de ce dernier, le tampon de freinage (6) ayant la forme d'une tige, dont une extrémité (7) entre en contact avec la périphérie de l'arbre de commande, et le moyen (8) comprenant un ressort spiral de compression pour solliciter l'extrémité (7) de la tige radialement par rapport à l'axe longitudinal de l'arbre de commande (2) au contact de la périphérie latérale de l'arbre de commande.

2. Machine de transformation de produits alimentaires selon la revendication 1, comprenant un sabot (9) monté d'une manière coulissante, dont une extrémité possède un alésage borge (10) destiné à recevoir au moins une partie de la tige (6) du tampon de freinage, et dont l'autre extrémité possède un épaulement à ergot (11, 12) sur lequel une extrémité du ressort spiral peut être montée en contact avec l'épaulement (11) pour solliciter élastiquement le sabot (9), et, en conséquence, l'extrémité (7) de la tige du tampon de freinage, au contact de la périphérie latérale de l'arbre de commande.

3. Machine de transformation de produits alimentaires selon la revendication 2, comprenant une enveloppe (13), possédant un alésage ou évidement axial, fixée d'une manière amovible à une surface de l'unité d'entraînement à moteur (1) au voisinage de son arbre de commande (2), enveloppe (13) possédant un épaulement annulaire (17) dans son alésage ou évidement (14), au voisinage immédiat de l'extrémité de l'alésage ou évidement (14) de l'enveloppe situé le plus près de l'arbre de commande (2) quand l'enveloppe (13) est fixée à la surface (4) de l'unité d'entraînement à moteur.

4. Machine de transformation de produits alimentaires selon la revendication 3, dans laquelle le sabot (9) peut se déplacer d'une manière coulissante sand l'alésage ou évidement (14) de l'enveloppe de telle sorte que l'extrémité (7) de la tige du tampon de freinage dépasse de l'extrémité ouverte de l'alésage ou évidement (14) de l'enveloppe située le plus prés de l'arbre de commande (2) quand l'enveloppe (13) est fixée à la surface (4) de l'unité d'entraînement à moteur, un collier extérieur annulaire (18) étant prévu sur le sabot (9) pour entrer en contact avec l'épaulement annulaire (17) se trouvant sur l'alésage ou évidement (14) de l'enveloppe pour limiter la course du sabot (9) et pour éviter que le sabot ne s'échappe de l'extrémité de l'alésage ou évidement de l'enveloppe, et le ressort spiral pouvant se loger dans l'alésage ou évidement (14) de l'enveloppe se trouvant sur l'ergot (12) du sabot, pour agir en une extrémité contre l'épaulement à ergot (11) du sabot et, en l'autre extrémité, ou bien contre une extrémité borgne de l'alésage ou évidement (14) de l'enveloppe, ou bien contre une face contiguë (19) de l'unité (1) d'entraînement par moteur, l'enveloppe (13) y étant fixée.

FIG. 1

FIG. 2

FIG. 3

FIG. 4

FIG. 5